Europäisches Patentamt

European Patent Office

Office européen des brevets

(19)

(11) Numéro de publication : **0 010 202**
**B1**

(12) **FASCICULE DE BREVET EUROPÉEN**

(45) Date de publication du fascicule du brevet :
19.05.82

(51) Int. Cl.³ : **F 16 H   5/56**

(21) Numéro de dépôt : **79103642.9**

(22) Date de dépôt : **25.09.79**

(54) Capsule à dépression pour boîte de vitesses automatique.

(30) Priorité : **12.10.78 FR 7829190**

(43) Date de publication de la demande :
**30.04.80 (Bulletin 80/09)**

(45) Mention de la délivrance du brevet :
**19.05.82 Bulletin 82/20**

(84) Etats contractants désignés :
**BE DE GB IT NL SE**

(56) Documents cités :
**US - A - 2 938 403**
**US - A - 3 020 776**
**US - A - 3 375 838**
**US - A - 3 688 606**
**US - A - 3 765 272**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Buannec, Michel**
**4, Allée des Bosquets**
**F-94800 Villejuif (FR)**

(74) Mandataire : **Casalonga, Alain et al**
**BUREAU D.A. CASALONGA OFFICE JOSSE & PETIT**
**Baaderstrasse 12-14**
**D-8000 München 5 (DE)**

Imprimerie Jouve, 18, rue St-Denis, 75001 Paris, France

EP 0 010 202 B1

Capsule à dépression pour boîte de vitesses automatique

La présente invention concerne une capsule à dépression pour la commande de régulation de pression d'huile d'une boîte de vitesses automatique en fonction de la dépression provenant du collecteur d'admission d'un moteur, dépression qui est l'image du couple moteur.

Des modes de réalisation de capsules à dépression pour commander la régulation de pression d'une boîte de vitesses automatique en fonction de la dépression moteur sont déjà connus.

On connaît en particulier une capsule à dépression qui est munie d'une membrane. Cette membrane sur laquelle agit la dépression moteur, travaille à l'encontre d'un ressort et permet de modifier, par l'intermédiaire d'un poussoir, la position du tiroir de la vanne de régulation de pression d'une boîte de vitesses. Cette membrane réalise également l'étanchéité entre la boîte de vitesses qui contient de l'huile et la partie de la capsule qui est reliée à la dépression moteur.

Une telle capsule présente de nombreux inconvénients. En particulier, il n'y a qu'une seule étanchéité entre la dépression moteur et la boîte de vitesses si bien que si la membrane unique présente un défaut d'étanchéité, l'huile de la boîte de vitesses se trouve rapidement aspirée par le moteur à cause de la dépression. Il y a alors un risque certain de détérioration de la boîte de vitesses par manque d'huile et un mauvais fonctionnement du moteur à cause de l'huile de boîte qui s'introduit dans le mélange combustible.

On connaît également une capsule à dépression qui est munie d'un soufflet métallique et d'un soufflet d'étanchéité. Ce soufflet métallique réalise sensiblement la même fonction que la membrane de l'exemple précédent. L'étanchéité entre la boîte de vitesses et la capsule est, dans ce cas, réalisée par le soufflet d'étanchéité.

Cette capsule à soufflet métallique présente l'inconvénient d'être encombrante et coûteuse car le réglage de cette capsule est indépendant et séparé de son mode de fixation au carter de la boîte de vitesses. En effet, ce réglage est assuré par un dispositif à vis-écrou avec contre-écrou et s'effectue en déplaçant la coupelle d'appui du ressort de la capsule par rapport à la position du poussoir donnée par la position de régulation recherchée.

Il est par ailleurs décrit, dans le brevet US 2 938 403, une capsule comprenant une membrane séparant une chambre intermédiaire reliée à l'atmosphère dans laquelle est disposé un bobinage entourant un poussoir relié à ladite membrane et une chambre à dépression. Un soufflet est également monté entre un second poussoir et une pièce intermédiaire de fixation en vue d'une étanchéité contre la poussière. Comme il est prévu un bobinage, on a été obligé de disposer le ressort de rappel dans la chambre à dépression. En outre, cette capsule n'est pas adaptée pour être fixée, d'une manière réglable, directement sur le carter d'une boîte de vitesses et sa structure est très complexe, donc coûteuse.

La présente invention a pour objet de remédier aux inconvénients précités.

La capsule à dépression pour la commande de régulation de pression d'une boîte de vitesses automatique, selon la présente invention, comprend un boîtier relié au carter de ladite boîte de vitesses, un poussoir sur lequel agit dans un sens un ressort et dans l'autre sens la dépression provenant du collecteur d'admission d'un moteur, une membrane et un soufflet d'étanchéité. Cette capsule comprend en outre une chambre à dépression reliée audit collecteur et une chambre intermédiaire reliée à l'atmosphère.

Selon la présente invention, ledit ressort se trouve dans la chambre intermédiaire qui est délimitée par le boîtier, le soufflet fixé d'une part au boîtier et d'autre part à une extrémité du poussoir, et ladite membrane qui est fixée d'une part à l'autre extrémité du poussoir et d'autre part au boîtier. Ce ressort qui repose sur une surface intérieure radiale du boîtier disposée entre la membrane et le soufflet et qui est relié au poussoir entre cette surface intérieure et le soufflet, agit sur le poussoir dans un sens allant de la membrane vers le soufflet, si bien qu'il entoure ledit poussoir.

La création d'une chambre intermédiaire entre le soufflet d'étanchéité et la membrane, qui est reliée à l'atmosphère et dans laquelle se trouve le ressort de la capsule, permet de protéger aussi bien la boîte de vitesses que le moteur. En effet, si le soufflet d'étanchéité devient non étanche, l'huile de boîte s'échappe de la chambre intermédiaire et la fuite est visible si bien que l'utilisateur se trouve alerté avant qu'il y ait un risque de détérioration de la boîte de vitesses par manque d'huile. D'autre part, si la membrane devient non étanche, la dépression moteur crée une aspiration d'air supplémentaire au niveau de la chambre intermédiaire si bien que le moteur est alimenté de façon incorrecte et l'utilisateur s'en rend compte avant la détérioration de celui-ci.

Selon la présente invention, le boîtier de la capsule à dépression comprend un filetage extérieur qui a un double rôle. Il assure d'une part la fixation de la capsule dans le carter de la boîte de vitesses et il assure d'autre part le réglage de cette capsule par un déplacement possible de la capsule par rapport au carter de boîte de vitesses en vue de la position de régulation recherchée.

Selon la présente invention, le boîtier est de préférence en matière plastique si bien que ses formes et en particulier son filetage peuvent être obtenus directement au moulage.

La présente invention sera mieux comprise à l'étude de modes de réalisation particuliers décrits à titre d'exemples nullement limitatifs et illustrés par les dessins annexés, sur lesquels :

la figure 1 représente en coupe une capsule à dépression selon la présente invention dans laquelle la membrane est maintenue sur le boîtier par un couvercle serti ;

la figure 2 représente en coupe une capsule à dépression selon la présente invention dans laquelle la membrane est maintenue sur le boîtier par un couvercle à cannelures ; et

la figure 3 représente la capsule de la figure 2 vue du côté couvercle.

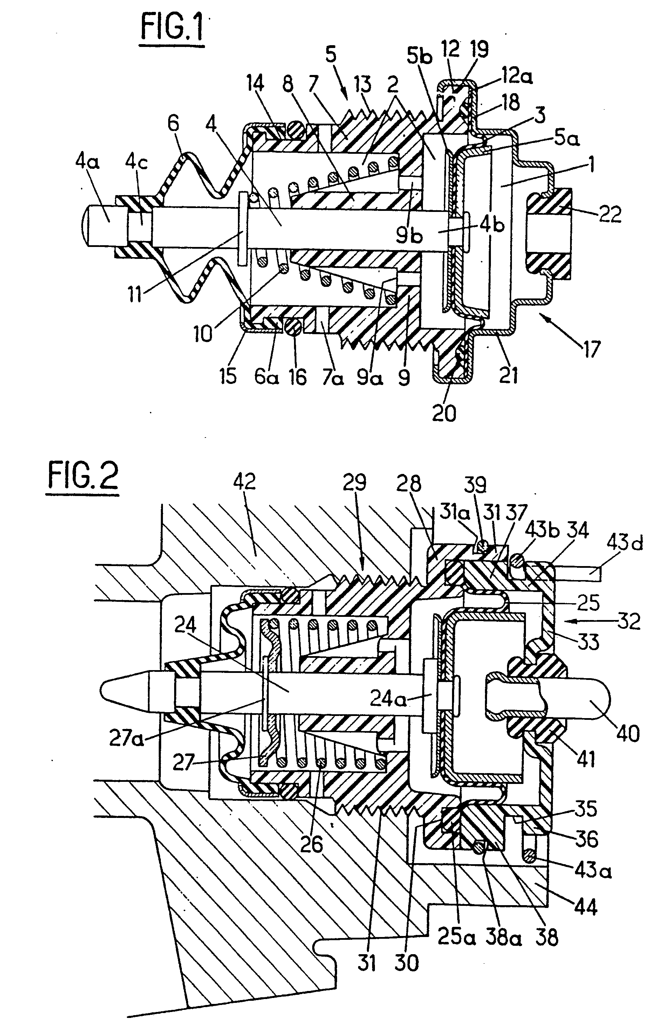

Sur la figure 1, est représentée une capsule à dépression qui comprend une chambre à dépression 1 et une chambre intermédiaire 2 séparées par une membrane 3.

La capsule comprend un poussoir 4 dont l'extrémité avant 4a peut agir sur le tiroir de régulation d'une boîte de vitesses, non représentée sur cette figure. La partie centrale de la membrane 3 est prise entre deux coupelles 5a et 5b et cet ensemble est fixé sur l'extrémité 4b du poussoir 4 opposée à l'extrémité 4a, par sertissage dans l'exemple représenté.

La chambre intermédiaire 2 est délimitée par la membrane 3, un boîtier repéré d'une manière générale par la référence 5 et un soufflet 6.

Le boîtier 5 comprend un partie extérieure sensiblement cylindrique 7 et une partie intérieure sensiblement cylindrique 8 coaxiale à ladite partie extérieure et traversée par le poussoir 4. Ces deux parties 7 et 8 du boîtier 5 sont reliées par une entretoise annulaire radiale 9 constituant une surface intérieure radiale 9a du côté de l'extrémité 4a du poussoir 4 sur laquelle repose un ressort conique 10 dont l'autre extrémité appuie sur un épaulement 11 du poussoir 4. L'entretoise 9 comprend des passages axiaux 9b car cette entretoise 9 coupe la chambre intermédiaire 2 en deux parties.

La partie extérieure 7 du boîtier 5 comprend, depuis la membrane 3 jusqu'au soufflet 6 un épaulement 12, une partie filetée 13 et une rainure 14.

Le soufflet 6 qui est monté d'une part dans une rainure 4c voisine de l'extrémité 4a du poussoir 4, est maintenu d'autre part dans la rainure 14 du boîtier grâce à une bague de maintien 15 qui entoure et comprime l'extrémité périphérique 6a du soufflet 6.

Un joint torique 16 est également placé dans la rainure 14 entre l'extrémité 6a du soufflet 6 et la partie filetée 13. Ce joint 16 est destiné à créer une liaison étanche entre le boîtier 5 et le carter de boîte de vitesses non représenté sur la figure 1.

La partie filetée 13 de la partie extérieure 7 du boîtier 5 est prévue pour le montage de la capsule dans le carter de boîte de vitesses et pour le réglage de celle-ci par un vissage plus ou moins avancé.

La partie extérieure 7 du boîtier 5 comprend en outre des trous radiaux 7a entre la partie filetée 13 et la rainure 14 et la partie filetée 13 comprend une rainure axiale extérieure non représentée, cette rainure et les trous 7a permettant de relier la chambre intermédiaire 2 à l'atmosphère.

La chambre à dépression 1 est délimitée d'une part par la membrane 3 et d'autre part par un couvercle repréré d'une manière générale par la référence 17.

Ce couvercle 17, qui est en tôle dans l'exemple représenté sur la figure 1, possède une paroi annulaire radiale 18, qui maintient la partie périphérique de la membrane 3 contre la face radiale 12a de l'épaulement 12 opposé à la partie filetée 13 grâce à un prolongement 19 de la paroi 18 qui est serti sur l'épaulement 12. Un joint torique 20 est disposé dans une rainure annulaire de la face 12a de l'épaulement 12 et réalise une liaison étanche entre la membrane 3 et le boîtier 5.

Le couvercle 17 comprend également une partie 21 de section orthogonale prolongeant à angle droit la paroi 18 et devant servir, par l'utilisation d'une clé adéquate, au montage et au réglage de la capsule. Cette partie 21 sert également au maintien du réglage par l'utilisation d'une agrafe de freinage non représentée sur la figure 1.

Le couvercle 17 comprend également un orifice central pour le passage d'un tube relié à la dépression moteur, qui est monté dans cet orifice central par l'intermédiaire d'une bague d'étanchéité 22.

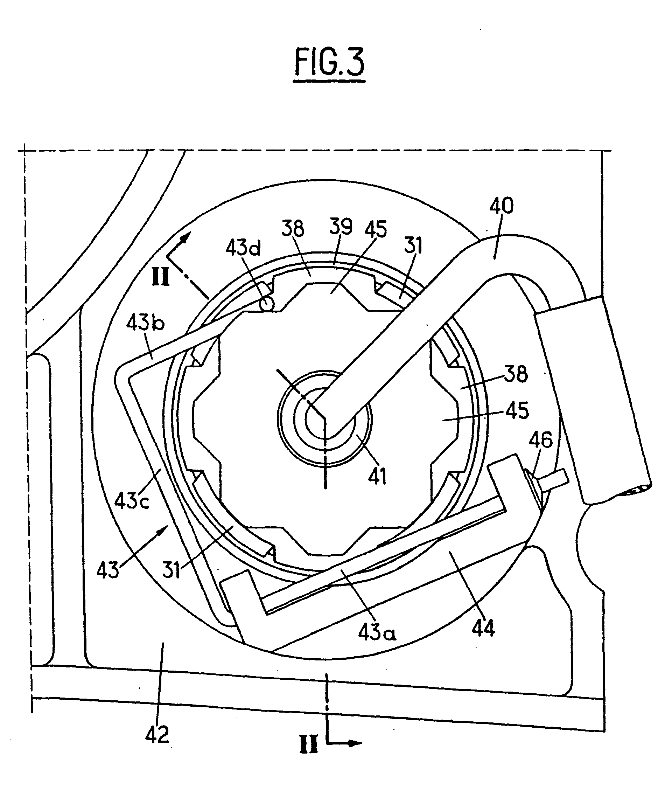

L'exemple de capsule à dépression représenté sur les figures 2 et 3 est voisin de celui représenté sur la figure 1. Il s'en différencie toutefois par le mode de liaison du ressort au poussoir et par la conception du couvercle.

En effet, du fait que le poussoir 24 possède un épaulement 24a à son extrémité sur laquelle est fixée par sertissage la membrane 25, le ressort cylindrique 26 agit sur une rondelle 27 qui elle-même agit sur un circlips 28 monté dans une gorge du poussoir 24.

Dans l'exemple représenté sur les figures 2 et 3, l'épaulement 28 du boîtier repéré d'une manière générale par la référence 29, correspondant à l'épaulement 12 du boîtier 5 représenté sur la figure 1, comprend une rainure annulaire axiale 30 opposée à la partie filetée 31 du boîtier 29 et dans laquelle pénètre le bourrelet périphérique 25a de la membrane 25.

La partie périphérique de l'épaulement 28 adjacente à la rainure 30 se prolonge par des griffes axiales 31 régulièrement réparties.

La capsule représentée sur les figures 2 et 3 comprend un couvercle repéré d'une manière générale par la référence 32 qui comprend une partie radiale 33 et une partie sensiblement cylindrique 34. La partie cylindrique 34 comprend une rainure extérieure périphérique 35 qui détermine un épaulement 36 adjacent à la partie radiale 33 et un épaulement 37. L'épaulement 37 est muni de cannelures axiales 38 sur sa périphérie régulièrement réparties. L'épaulement 34 est dimensionné pour pénétrer dans le cylindre intérieur déterminé par les griffes 31.

Les griffes 31 et les cannelures 38 présentent des rainures circonférentielles 31a et 38a correspondantes qui peuvent recevoir un jonc 39 afin de solidariser le couvercle 32 au boîtier 29.

Lorsque le couvercle 32 est monté sur le boîtier 29, chaque cannelure 38 occupe sensiblement l'intervalle entre deux griffes adjacentes 31 et l'extrémité de la partie cylindrique 34 du couvercle 32 maintient le bourrelet 25a de la membrane 25 comprimé dans la rainure 30 du boîtier 29 grâce au jonc 39, de façon à créer une liaison étanche entre le boîtier 29 et la membrane 25 et entre le couvercle 32 et cette membrane.

La paroi 33 du couvercle 32 présente un orifice dans lequel pénètre un tube 40 relié au collecteur d'admission d'un moteur, tube 40 qui est fixé à la paroi 32 par l'intermédiaire d'une bague d'étanchéité 41.

Il a été représenté sur les figures 2 et 3 un moyen pour maintenir le réglage de la capsule dans une position déterminée, réglage obtenu par un vissage plus ou moins profond de la capsule dans un carter de boîte de vitesses 42.

Ce moyen comprend une épingle élastique 43 qui comprend deux branches sensiblement parallèles 43a et 43b reliées entre elles par une branche 43c. Cette épingle comprend en outre une branche 43d qui prolonge la branche 43b et qui est orthogonale au plan général de cette épingle.

La branche 43a est montée, de façon à pouvoir pivoter, sur un prolongement 44 du bâti 42 de façon à être perpendiculaire à l'axe général de la capsule. Dans la position montée, la branche 43b de l'épingle 43 pénètre dans la rainure 35 du couvercle 32 et se trouve à l'opposé de la branche 43a par rapport à l'axe général de la capsule. La branche 43d qui dépasse largement de la paroi radiale 33 du couvercle 32 coopère, grâce à son élasticité, avec une dent 45 de l'épaulement 36 qui en est muni de façon régulière sur toute sa périphérie afin d'empêcher le couvercle 32 et donc le boîtier 29 de tourner par rapport au carter 42.

Si l'on veut modifier le réglage de la capsule, il suffit de dégager la branche 43d des dents 45 et de tourner dans un sens ou dans l'autre la capsule. Ainsi, la branche 43d de l'épingle 43 coopérera avec une autre dent du couvercle afin de maintenir la capsule dans la nouvelle position choisie.

La branche 43a de l'épingle 43 peut être munie à son extrémité libre d'une rondelle 46 afin d'empêcher tout déplacement axial de cette branche.

De préférence, le boîtier de la capsule selon la présente invention est réalisé en matière plastique et peut donc être obtenu directement sans nécessiter d'usinage ultérieur. Le couvercle de la capsule tel qu'il est décrit dans l'exemple représenté sur les figures 2 et 3 est également avantageusement en matière plastique.

Il ressort des deux exemples qui viennent d'être décrits que la capsule selon la présente invention évite le pompage de l'huile de la boîte de vitesses dès qu'un des éléments et en particulier la membrane s'évère défectueux. En outre, la capsule selon l'invention présente un encombrement réduit et une unification du mode de réglage et d'arrêt qui permet à cette capsule d'être utilisée dans toutes les versions de boîtes de vitesses automatique.

## Revendications

1. Capsule à dépression pour la commande de régulation de pression d'une boîte de vitesses automatique, comprenant un boîtier (5, 29) relié au carter de ladite boîte de vitesses, un poussoir (4, 24) sur lequel agit dans un sens un ressort (10, 26) et dans l'autre la dépression provenant du collecteur d'admission d'un moteur par l'intermédiaire d'une membrane (3, 25) et un soufflet d'étanchéité (6), et comprend en outre une chambre à dépression (1) reliée audit collecteur, caractérisée par le fait que ledit ressort (10, 26) se trouve dans une chambre intermédiaire (2) reliée à l'atmosphère et délimitée par le boîtier (5, 29), le soufflet (6) fixé d'une part au boîtier et d'autre part à une extrémité du poussoir (4, 24), et ladite membrane (3, 25) qui est fixée d'une part à l'autre extrémité du poussoir et d'autre part au boîtier, ledit ressort reposant sur une surface intérieure radiale (9a) du boîtier disposé entre la membrane et le soufflet et étant relié au poussoir entre ladite surface intérieure et le soufflet, pour agir sur le poussoir dans un sens allant de la membrane vers le soufflet.

2. Capsule à dépression selon la revendication 1, caractérisée par le fait que le boîtier comprend une partie extérieure sensiblement cylindrique (7) et une partie intérieure sensiblement cylindrique (8) coaxiale à ladite partie extérieure et traversée par ledit poussoir (4), et une entretoise annulaire radiale (9) reliant ladite partie extérieure et ladite partie intérieure et constituant ladite surface intérieure radiale (9a) sur laquelle repose ledit ressort (10, 26), cette entretoise (9) comprenant des passages axiaux (9b).

3. Capsule à dépression selon l'une des revendications précédentes, caractérisée par le fait que la partie extérieure (7) du boîtier comprend une partie filetée (13, 31) pour le montage de la capsule dans le carter (42) de la boîte de vitesses et pour le réglage de celle-ci.

4. Capsule à dépression selon l'une des revendications précédentes, caractérisée par le fait que la partie extérieure (7) du boîtier comprend une rainure (14) pour le montage dudit soufflet (6) et pour y loger un joint torique (16) assurant une liaison étanche entre le carter de la boîte de vitesses et le boîtier, la partie périphérique du soufflet étant maintenue sur le boîtier grâce à une bague de maintien (15) qui l'entoure et la comprime.

5. Capsule à dépression selon l'une des revendications précédentes, caractérisée par le fait que la partie extérieure du boîtier (7) comprend des passages radiaux (7a) pour relier ladite chambre intermédiaire (2) à l'atmosphère.

6. Capsule à dépression selon l'une des revendications précédentes, caractérisée par le fait que ladite chambre à dépression (1) est délimitée par ladite membrane (3) et un couvercle (17, 32) solidaire du boîtier (5, 20) assurant le montage de la membrane sur le boîtier et permettant de régler la capsule par rapport au carter de la boîte de vitesses et de maintenir ce réglage.

7. Capsule à dépression selon la revendication 6, caractérisée par le fait que ledit couvercle (17, 32) comprend un orifice pour le passage d'un tube (22, 40) relié à la dépression d'un moteur, qui est monté dans l'orifice par l'intermédiaire d'une bague d'étanchéité (22, 41).

8. Capsule à dépression selon l'une des revendications 6 et 7, caractérisée par le fait que la partie périphérique dudit couvercle (17) maintient comprimée la partie périphérique de ladite membrane (3) et est sertie sur un épaulement (12) de la partie extérieure du boîtier (5) et que ledit couvercle (17) comprend une partie de section octogonale (21).

9. Capsule à dépression selon l'une des revendications 6 et 7, caractérisée par le fait que la partie extérieure du boîtier (29) se prolonge axialement par des griffes (31) régulièrement réparties et ledit couvercle (32) comprend une partie cylindrique (37) qui pénètre dans le cylindre intérieur déterminé par lesdites griffes (31) et qui comprend des cannelures extérieures axiales (38) régulièrement réparties et disposées entre lesdites griffes (31), le couvercle (32) étant fixé au boîtier grâce à un jonc (39) pénétrant dans une rainure extérieure (31a, 38a) réalisée d'une façon correspondante dans lesdites griffes et lesdites cannelures, et la partie périphérique de ladite membrane (35) étant maintenue comprimée sur le boîtier grâce à ladite partie cylindrique (37) du couvercle (32).

10. Capsule à dépression selon la revendication 9, caractérisée par le fait qu'une épingle (43) reliée d'une part au carter (42) de la boîte de vitesses et coopérant d'autre part avec des dents (45) pratiquées sur le couvercle (32), maintient le boîtier muni du couvercle dans la position de réglage désirée.

11. Capsule à dépression selon l'une des revendications précédentes, caractérisée par le fait que ledit boîtier est en matière plastique.

12. Capsule à dépression selon l'une des revendications 9 et 10, caractérisée par le fait que ledit couvercle est en matière plastique.

## Claims

1. A vacuum operated actuator for controlling the pressure regulating system of an automatic gearbox, comprising a body (5, 29) connected to the casing of the said gearbox, a plunger (4, 29) which is acted on in one direction by a spring (10, 26) and in the other direction by the depression from the engine inlet manifold via a diaphragm (3, 25) and a sealing bellows (6), and also comprising a vacuum chamber (1) connected to the said manifold, characterized in that the said spring (10, 26) is located in a middle chamber (2) connected to the atmosphere and bound by the body (5, 29), the bellows (6) fixed both to the body and to one end of the plunger (4, 24) and the said diaphragm (3, 25) which is fixed both to the other end of the plunger and to the body, with the said spring resting on a radial inner surface (9a) of the body located between the diaphragm and the bellows and being connected to the plunger between the said inner surface and the bellows, so as to act on the plunger in the direction running from the diaphragm to the bellows.

2. The vacuum operated actuator according to claim 1, characterized in that the body comprises a roughly cylindrical external section (7) and a roughly cylindrical internal section (8) coaxial with the said external section and having the said plunger (4) passing through it, and a radial annular spacer (9) connecting the said external section and the said internal section and forming the said radial inner surface (9a) on which the said spring (10, 26) rests, with this spacer (9) containing axial passageways (9b).

3. The vaccum operated actuator according to any of the previous claims, characterized in that the external section (7) of the body comprises a threaded part (13, 31) for fitting the actuator into the casing (42) of the gearbox and for adjusting the latter.

4. The vacuum operated actuator according to any of the preceding claims, characterized in that the external section )7 of the body comprises a groove (14) for fitting the said bellows (6) and for housing and O-ring (16) providing a leaktight connection between the gearbox casing and the body, with the peripheral part of the bellows being held on the body by means of a grip ring (15) which surrounds and compresses it.

5. The vacuum operated actuator according to any of the preceding claims, characterized in that the external part of the body (7) comprises radial passages (7a) to connect the said middle chamber (2) to the atmosphere.

6. The vacuum operated actuator according to any of the previous claims, characterized in that the said vacuum chamber (1) is bound by the said diaphragm (3) and a cover (17, 32) fixed to the body (5, 20), providing for assembly of the diaphragm onto the body, enabling the actuator to be adjusted with respect to the gearbox casing and enabling this adjustment to be maintained.

7. The vacuum operated actuator according to claim 6, characterized in that the said cover (17, 32) comprises an opening for a tube (22, 40) to pass through, this tube being connected to the depression of an engine and being mounted in the opening by means of a sealing bush (22, 41).

8. The vacuum operated actuator according to either of claims 6 and 7, characterized in that the peripheral part of the said cover (17) holds the peripheral part of the said diaphragm (3) compressed and is crimped onto a shoulder (12) on the external section of the body (5), and in that the said cover (17) comprises a part with an octagonal cross-section (21).

9. The vacuum operated actuator according to either of claims 6 and 7, characterized in that the external section of the body (29) is extended axially by equispaced claws (31) and the said cover (32) comprises a cylindrical section (37) which enters the inside cylinder formed by the said claws (31) and which comprises equispaced external axial spines (38) located between the said claws (31), the cover (32) being fixed to the body by means of a ring (39) inserted in an outer groove (31a, 38a) made in the said claws and the said splines so as to correspond, and the peripheral part of the said diaphragm (35) being held compressed onto the body by means of the said cylindrical section (37) of the cover (32).

10. The vacuum operated actuator according to claim 9, characterized in that a clip (43) connected to the gearbox casing (42) at one end and engaging at the other end with teeth (45) made in the cover (32), holds the body fitted with the cover in the required adjustment position.

11. The vacuum operated actuator according to any of the preceding claims, characterized in that the said body is made of plastics material.

12. The vacuum operated actuator according to either of claims 9 and 10, characterized in that the said cover is made of plastics material.

## Ansprüche

1. Unterdruckdose zur Druckregelungssteuerung eines automatischen Schaltgetriebes, die ein Gehäuse (5, 29), das mit dem Gehäuse des genannten Getriebes verbunden ist, einen Stössel (4, 24), auf den in einer Richtung eine Feder (10, 26) und in der anderen Richtung der Unterdruck aus dem Ansaugrohr eines Motors über eine Membran (3, 25) wirkt, und eine Abdichtmanschette (6) umfasst, und die ferner einen Unterdruckbehälter (1) enthält, der mit dem genannten Ansaugrohr verbunden ist, dadurch gekennzeichnet, dass die genannte Feder (10, 26) in einer Zwischenkammer (2) angeordnet ist, die mit der Atmosphäre in Verbindung steht und die vom Gehäuse (5, 29), von der einerseits am Gehäuse und andererseits an einem Ende des Stössels (4, 24) befestigten Manschette (6) und von der einerseits am anderen Ende des Stössels und andererseits am Gehäuse befestigten Membran (3, 25) abgegrenzt ist, wobei die genannte Feder auf einer radialen Innenfläche (9a) des Gehäuses aufliegt, die zwischen der Membran und dem Balg angeordnet ist, und zwischen dieser Innenfläche und der Manschette mit dem Stössel verbunden ist, um auf den Stössel in einer Richtung zu wirken, die von der Membran zur Manschette geht.

2. Unterdruckdose gemäss Anspruch 1, dadurch gekennzeichnet, dass das Gehäuse einen im wesentlichen zylindrischen Aussenteil (7) und einen im wesentlichen zylindrischen und zum genannten Aussenteil koaxialen Innenteil (8), durch den der genannte Stössel (4) ragt, sowie eine radiale ringförmige Distanzbuchse (9) enthält, die diesen Aussenteil und diesen Innenteil verbindet und die genannte radiale Innenfläche (9a) bildet auf der die Feder (10, 26) aufliegt, wobei diese Distanzbuchse (9) axiale Durchgänge (9b) aufweist.

3. Unterdruckdose gemäss einem der vorstehenden Ansprüche, dadurch gekennzeichnet, dass der Aussenteil (7) des Gehäuses einen Gewindeteil (13, 31) zur Montage der Unterdruckdose auf dem Gehäuse (42) des Schaltgetriebes und zur Steuerung desselben enthält.

4. Unterdruckdose gemäss einem der vorstehenden Ansprüche, dadurch gekennzeichnet, dass der Aussenteil (7) des Getriebes eine Nut (14) für die Montage der genannten Manschette (6) und zur Aufnahme eines Dichtrings (16) enthält, der die dichtende Verbindung, zwischen dem Gehäuse des Schaltgetriebes und dem Gehäuse sichert, wobei die Manschette entlang ihrem Umfang mit einem Haltering (15) auf dem Gehäuse festgehalten wird, der sie umgibt und zusammendrückt.

5. Unterdruckdose gemäss einem der vorstehenden Ansprüche, dadurch gekennzeichnet, dass der Aussenteil des Gehäuses (7) radiale Durchgänge (7a) enthält, um diese Zwischenkammer (2) mit der Atmosphäre zu verbinden.

6. Unterdruckdose gemäss einem der vorstehenden Ansprüche, dadurch gekennzeichnet, dass die Unterdruckbehälter (1) durch die genannte Membran (3) und einen Deckel (17, 32) abgegrenzt wird, der auf dem Gehäuse (5, 20) befestigt ist, und der die Montage der Membran auf dem Gehäuse sicherstellt und die Einstellung der Kapsel gegenüber dem Gehäuse des Schaltgetriebes und die Beibehaltung dieser Einstellung ermöglicht.

7. Unterdruckdose gemäss Anspruch 6, dadurch gekennzeichnet, dass dieser Deckel (17, 32) eine Öffnung zur Durchführung eines Rohres (22, 40) enthält, das mit der Unterdruckseite eines Motors verbunden ist, und mittels eines Dichtrings (22, 41) auf die Öffnung montiert ist.

8. Unterdruckdose gemäss einem der vorstehenden Ansprüche 6 und 7, dadurch gekennzeichnet, dass der Umfangsteil des Deckels (17) den Umfangsteil der genannten Membran (3) zusammengedrückt hält und über einen Absatz (12) des Gehäuseaussenteils (5) gebördelt ist, und dass der genannte Deckel (17) einen Teil mit achteckigem Querschnitt (121) umfasst.

9. Unterdruckdose gemäss einem der Ansprüche 6 und 7, dadurch gekennzeichnet, dass der Gehäuseaussenteil (29) axial durch gleichmässig verteilte Klauen (31) verlängert wird, und dass der genannte Deckel (32) einen zylindrischen Teil (37) enthält, der in den durch die genannten Klauen (31) gebildeten Innenzylinder eindringt, und der zwischen den genannten Klauen (31) gleichmässig verteilte axiale äussere Auskehlungen enthält, wobei der Deckel (32) mit Hilfe eines Sprengrings (39) am Gehäuse befestigt ist, der in eine Aussennut (31a, 38a) eingreift, die entsprechend in den Klauen und den genannten Kehlungen angeordnet sind, und wobei der Umfangsteil der Membran (35) mit Hilfe dieses zylindrischen Teils (37) des Deckels (32) auf dem Gehäuse angedrückt bleibt.

10. Unterdruckdose gemäss Anspruch 9, dadurch gekennzeichnet, dass eine Nadel (43), die einerseits am Gehäuse (42) des Schaltgetriebes befestigt ist und andererseits mit Zähnen (45) zusammenarbeitet, die auf dem Deckel (32) ausgebildet sind, das Gehäuse, das mit dem Deckel versehen ist, in der gewünschten Einstellage festhält.

11. Unterdruckdose gemäss einem der vorstehenden Ansprüche, dadurch gekennzeichnet, dass das genannte Gehäuse aus Kunststoff ist.

12. Unterdruckdose gemäss einem der Ansprüche 9 und 10, dadurch gekennzeichnet, dass der genannte Deckel aus Kunststoff ist.

## FIG.1

## FIG.2

# FIG.3